# EUROPÄISCHE PATENTSCHRIFT

(11) **EP 2 924 501 B1**
(45) Veröffentlichungstag und Bekanntmachung des Hinweises auf die Patenterteilung: **07.09.2016**
(21) Anmeldenummer: 14465501.6
(22) Anmeldetag: 27.03.2014
(51) Int. Cl.: G03B 17/02, B60R 11/04, H04N 5/225

(54) **Kamerasystem eines Fahrassistenzsystems**
Camera system of a driver assistance system
Système de caméra d'un système d'assistance du conducteur

(43) Veröffentlichungstag der Anmeldung: 30.09.2015
(73) Patentinhaber: Conti Temic microelectronic GmbH, 90411 Nürnberg (DE); Continental Automotive GmbH, 30165 Hannover (DE)
(72) Erfinder: Gruber, Andreas, 88161 Lindenberg i .Allg. (DE); Christescu, Radu, 305100 Timis (RO); Ionescu, Claudiu, 215200 Motru (RO)

(56) Entgegenhaltungen:
- EP-A2- 0 308 749
- DE-A1-102007 017 238
- DE-A1-102013 200 966

## Beschreibung

Die Erfindung betrifft ein Kamerasystem eines Fahrassistenzsystems.

Ein solches Kamerasystem umfasst typischerweise ein Kameramodul zur Erzeugung von Bilddaten der Umgebung oder auch des Innenraumes eines Fahrzeuges. Mittels weiterer Elektronik, die entweder ein Teil des Kamerasystems ist oder anderswo im Fahrzeug angebracht ist, werden die Bilddaten verarbeitet, um beispielsweise ein Verkehrsrisiko zu ermitteln und darauffolgend eine entsprechende Warnung auszugeben. Typischerweise umfasst ein Kamerasystem ein Gehäuse, in welchem insbesondere das Kameramodul sowie eine weitere Platine mit Elektronik beispielsweise zur Weiterverarbeitung der Bilddaten angeordnet sind. Das Gehäuse ist an geeigneter Stelle im Fahrzeug eingebaut.

Um eine korrekte Anordnung und Ausrichtung des Kameramoduls im Gehäuse und insbesondere auch relativ des Fahrzeuges zu gewährlisten, ist das Gehäuse häufig als Druckgussteil ausgebildet. Hierdurch werden insbesondere Konturen und Positionierhilfen derart geschaffen, dass in dem Gehäuse eingebaute Komponenten geeignet positioniert sind. Nachteilig ist dabei, dass ein Druckgussverfahren kostenintensiv und aufwendig ist, insbesondere im Falle hoher Stückzahlen, wie dies für das genannte Kamerasystem der Fall sein kann.

Da typischerweise auch für Fahrzeuge geltende EMV-Richtlinien eingehalten werden sollen, ist das Gehäuse zusätzlich aus einem leitenden Material gefertigt und möglichst vollständig geschlossen. Durch diese Anforderung muss auch das Druckgussteil entsprechend ausgelegt werden und es ergibt sich insgesamt ein hoher Materialaufwand.

Die Druckschrift DE 10 2007 017 238 A1 beschreibt ein Kameramodul für ein Fahrzeug, mit einem Gehäuse mit einem Gehäuseinnenraum und einem Optikmodul, das in dem Gehäuseinnenraum angeordnet ist und einen Schaltungsträger mit einem Bildaufnahme-Chip und elektrische Kontaktierungen aufweist. Das Optikmodul ist durch einen optischen Austritt auf einen Außenraum außerhalb des Gehäuses gerichtet. Das Gehäuse weist mindestens zwei Gehäuseteile auf, die in einer hermetisch dichten Verbindung, z. B. einer Schweißverbindung oder Lötverbindung miteinander verbunden sind.

Der Erfindung liegt daher die Aufgabe zugrunde ein verbessertes Kamerasystem anzugeben, welches einfach und kostengünstig herstellbar ist.

Diese Aufgabe wird erfindungsgemäß gelöst durch ein Kamerasystem mit den Merkmalen des Anspruchs 1. Vorteilhafte Ausgestaltungen, Weiterbildungen und Varianten sind Gegenstand der Unteransprüche.

Hierzu ist vorgesehen, dass ein Kamerasystem eines Fahrassistenzsystems ein Kameramodul mit einer Optik aufweist, sowie ein Gehäuse, das ein erstes und ein zweites Gehäuseteil umfasst. Desweiteren sind die Gehäuseteile jeweils aus Blech gefertigt und wenigstens das erste Gehäuseteil ist ein Tiefziehteil. Weiterhin umfasst das Kamerasystem eine im Innenraum des Gehäuses angeordnete Platine. Solch ein Kamerasystem ist insbesondere kostengünstig herstellbar. Desweiteren ist das Gehäuse geeigneterweise ohne Druckgussteile herstellbar. Dabei ist der Innenraum im Wesentlichen komplett von dem Gehäuse eingehaust, wodurch sich insbesondere ein vorteilhaftes EMV-Verhalten ergibt. Insbesondere weist ein solches Gehäuse auch vorteilhafte Wärmeleiteigenschaften auf.

Die Gehäuseteile sind typischerweise zwei Gehäusehalbschalen mit jeweils einem Randbereich, wobei die Randbereiche miteinander geeignet verbunden sind und dadurch einen Innenraum bilden. Alternativ sind mehr als zwei Gehäuseteile vorgesehen, wodurch das Gehäuse flexibler gestaltbar ist. Alternativ sind das erste und das zweite Gehäuseteil zwei Abschnitte eines einzelnen Teiles, welches nach Anordnung von dem Kameramodul, der Platine und eventueller weiterer Komponenten zusammengeklappt und an den nun aneinanderliegenden Randbereichen geeignet verschlossen wird.

Vorzugsweise ist jedes der Gehäuseteile als Tiefziehteil gefertigt, wodurch sich das Gehäuse im Vergleich zu Druckgussteilen kostengünstiger fertigen lässt. Mit anderen Worten: das Gehäuse ist ein Vollblechgehäuse, welches insbesondere kostengünstig und/oder in hoher Stückzahl herstellbar ist. Dadurch ist insbesondere auch eine Verwendung von Druckgussteilen vermeidbar, wodurch sich wiederum der Fertigungsaufwand für das Kamerasystem reduziert. Insbesondere weisen die als Tiefziehteile aus Blech ausgebildeten Gehäuseteile vorteilhaft eine geringe Materialstärke auf, wodurch sich insbesondere ein geringes Gewicht des Kamerasystems ergibt.

In einer bevorzugten Weiterbildung weist das Gehäuse eine innenliegende Referenzfläche zur Ausrichtung des Kameramoduls auf. Dieses weist typischerweise eine Blickrichtung auf, welche zwecks Bilddatenerfassung in geeigneter Weise bezüglich beispielsweise der Fahrtrichtung orientiert sein soll. Mittels der Referenzfläche ist es insbesondere möglich, das Kameramodul an dieser anzulegen und dadurch eine geeignete Positionierung des Kameramoduls und damit eine Ausrichtung der Blickrichtung zu gewährleisten. Vorteilhafterweise ist die Referenzfläche die Innenseite einer Stirnwand des ersten Gehäuseteiles. Da dieses ein Tiefziehteil ist, ist es insbesondere möglich, das Kameramodul geeignet anzuordnen, ohne ein Druckgussteil mit entsprechend ausgebildeten Konturen zu verwenden. Dies reduziert vorteilhaft die Kosten des Kamerasystems.

Durch geeignetes Tiefziehen des Gehäuseteiles ist beispielsweise ein zusätzlicher Aufbau an diesem ausgeformt. Dieser dient insbesondere als Einhausung für das Kameramodul und weist gehäuseinnenseitig eine Anzahl von Wänden auf. Eine dieser Wände dient als Stirnwand und deren gehäuseinnenseitig liegende Oberfläche als Referenzfläche. Diese ist insbesondere orthogonal zur Blickrichtung des Kameramoduls orientiert.

Geeigneterweise liegt die Optik zur Ausrichtung an dem Gehäuse an der Referenzfläche an. Die Optik ist typischerweise ein rotationssymmetrisches Objektiv mit einer optischen Achse, die insbesondere auch die Blickrichtung des Kameramoduls vorgibt. Durch Anlegen an der Referenzfläche ist die Optik insbesondere geeignet ausgerichtet. Die Referenzfläche dient dabei insbesondere als Anschlagfläche beim Einsetzen des Kameramoduls, wodurch dieses in entsprechender Richtung positioniert ist. Dazu weist die Optik geeigneterweise auf deren der Referenzfläche zugewandten Seite Anlagepunkte und/oder Anlageflächen auf. Beispielsweise umfasst die Optik ein bezüglich der optischen Achse rotationssymmetrisches Optikgehäuse. In diesem sind insbesondere Abbildungsoptiken, beispielsweise Linsen angeordnet. Das Optikgehäuse ist beispielsweise nach Art zweier bezüglich der optischen Achse hintereinander angeordneter Zylinder ausgestaltet. Dabei weist das Optikgehäuse eine Mantelfläche auf, die in Richtung der optischen Achse vorzugsweise eine Stufe aufweist. Mit anderen Worten: die beiden Zylinder weisen unterschiedliche Durchmesser auf. Hierdurch ist insbesondere eine ringförmige Fläche geschaffen, die als Anlagefläche zum Anlegen an die Referenzfläche dient. Von Vorteil ist zusätzlich, dass die Referenzfläche als Fläche eine flexible Ausgestaltung und Positionierung der Anlagepunkte und/oder Anlageflächen der Optik und dadurch insbesondere ein flexibles Design des Optikgehäuses ermöglicht. Bevorzugterweise sind die Optik und die Kameramodulplatine miteinander verbunden, beispielsweise verklebt. Vorteilhafterweise ist das Optikgehäuse aus einem Metall gefertigt und mit dem Gehäuse verschweißt, wodurch sich eine besonders stabile Verbindung ergibt. In einer bevorzugten Weiterbildung weist das Gehäuse eine von einer Kragenkontur umlaufene Ausnehmung zur Aufnahme der Optik auf. Die Kragenkontur ist bevorzugt aus der Stirnwand ausgeformt, insbesondere mittels eines Tiefziehverfahrens. Beispielsweise wird die Kragenkontur direkt bei der Fertigung des diese enthaltenden Gehäuseteiles und vorteilhafterweise zusammen mit dem Aufbau ausgebildet. Hierdurch ist die Kragenkontur insbesondere einfach herstellbar. Desweiteren fasst die Kragenkontur geeigneterweise eine Öffnung ein. Bei der Montage ist es dann insbesondere möglich, die Optik von der Gehäuseinnenseite aus durch die Öffnung hindurch zu führen, bis die Optik an der Referenzfläche anliegt und/oder anschlägt.

Durch die Kragenkontur ist das Objektiv insbesondere in radialer Richtung gelagert. In Kombination mit der Referenzfläche ergibt sich damit insbesondere eine definierte Positionierung des Kameramoduls und Ausrichtung der optischen Achse bezüglich des Gehäuses in allen drei Raumrichtungen. Dabei ist die Referenzfläche insbesondere parallel zur Kameramodulplatine und senkrecht zur optischen Achse ausgerichtet.

In einer bevorzugten Ausgestaltung ist die Platine verrutschsicher in dem Gehäuse angebracht, wodurch insbesondere eine Beschädigung während des Betriebes vermieden wird. Vorteilhafterweise weist die Platine einen Randbereich auf, der durch eine geeignete und insbesondere flache Bauform des Gehäuses in montiertem Zustand festgeklemmt ist, wodurch insbesondere ein Verrutschen verhindert wird.

Insbesondere ist die Bauform des Kamerasystems derart gestaltet, dass das Gehäuse im Innenraum möglichst wenig Leerraum aufweist. Dazu weist das Gehäuse vorteilhafterweise in einer Dimension eine deutlich geringere Abmessung als in den beiden verbleibenden Dimensionen auf. Beispielsweise ist die geringere Abmessung etwa eine Größenordnung geringer als die Abmessungen in den beiden verbleibenden Dimensionen. Im Falle eines solchen flachen Gehäuses ist dieses vorzugsweise zusätzlich abgeknickt und/oder ab-/angewinkelt, wodurch insbesondere wenigstens zwei Gehäuseschenkel (im Folgenden lediglich Schenkel genannt) ausgebildet werden.

Erfindungsgemäß ist das Gehäuse nach Art zweier in einem Winkel zueinander angeordneter Schenkel oder auch Flügel ausgeformt. Dabei sind die Schenkel nicht notwendigerweise separat gefertigte Teile, sondern fassen insbesondere Teilbereiche verschiedener Gehäuseteile zusammen. Dabei ist es möglich, dass verschiedene Teilbereiche eines Gehäuseteiles verschiedenen Schenkeln zugeordnet sind. Beispielsweise bildet das erste Gehäuseteil die Innenseite eines Schenkelpaares und das zweite Gehäuseteil dessen Außenseite. Dabei weisen insbesondere beide Gehäuseteile einen dem Winkel entsprechenden, abknickenden Verlauf auf. Hierdurch ist es insbesondere möglich, das Kamerasystem im Innenraum des Fahrzeuges platzsparend zu verbauen. Weiterhin ist der Winkel bevorzugterweise kleiner als 180° und größer als 90°. Hierdurch ist insbesondere ein einfaches Zusammenführen der Gehäuseteile zur Ausbildung des Gehäuses gewährleistet.

Die beiden Schenkel umfassen insbesondere jeweils einen Teil des Gehäuseinnenraumes, wobei die Platine in dem einen Schenkel und das Kameramodul in dem anderen Schenkel angeordnet sind. Bei der Fertigung des Gehäuses ist es hierdurch möglich, dieses beispielsweise an Konturen des Fahrzeuges anzupassen. Dadurch ist das Gehäuse besonders platzsparend verbaubar.

In einer weiteren bevorzugten Ausgestaltung weist das Gehäuse eine Öffnung zur Durchführung eines mit der Platine verbundenen Anschlusses auf. Insbesondere ist das Kamerasystem über den Anschluss mit Energie versorgbar. Vorzugsweise ist auch das Kameramodul mit der Platine verbunden. Alternativ ist das Kameramodul direkt mit dem Anschluss oder einem weiteren Anschluss verbunden. Dadurch sind mittels des Anschlusses insbesondere auch Daten, beispielsweise Bilddaten mit weiteren Systemen des Fahrzeuges austauschbar.

Der Anschluss ist typischerweise ein Steckverbinder, der zur Ausrichtung vorteilhaft einen Kragen aufweist, welcher die Öffnung umlaufend an dem Gehäuse anliegt. Alternativ weist das Gehäuse um die Öffnung herum eine Kragenkontur ähnlich der für die Optik vorgesehenen Kragenkontur auf, wodurch insbesondere auch der Anschluss entsprechend positionierbar ist.

Bevorzugt weisen die Gehäuseteile jeweils einen vollständig umlaufenden Randbereich auf, an dem diese miteinander verbunden sind. Hierdurch ist insbesondere eine lückenlose EMV-Abschirmung realisierbar und damit eine Einhaltung von EMV-Richtlinien gewährleistet. Desweiteren wird vorteilhaft ein Eindringen von Schmutz verhindert. In einer geeigneten Ausgestaltung sind die Gehäuseteile entlang der Randbereiche verschweißt, wodurch eine besonders haltbare und dichte Verbindung geschaffen ist. Vorteilhaft dienen die beim Schweißen entstandenen Schweißbünde insbesondere auch als Widerlager oder Positionierhilfe beim Einbau des Kamerasystems in das Fahrzeug.

Nachfolgend wird ein Ausführungsbeispiel der Erfindung anhand einer Zeichnung näher erläutert. Die einzige Figur zeigt in schematischer Darstellung eine Schnittansicht eines Kamerasystems mit einem Gehäuse.

Ein Kamerasystem 2 umfasst ein Gehäuse 4, mit einem ersten Gehäuseteil 6 und einem zweiten Gehäuseteil 8, die als Tiefziehteile und aus Blech gefertigt sind. Beide Gehäuseteile 6,8 sind gewinkelt ausgeformt und bilden ein Schenkelpaar 9a, 9b, welches einen stumpfen Winkel W einschließt. Das erste Gehäuseteil 6 liegt dabei innenseitig, das zweite Gehäuseteil 8 außenseitig. Beide Gehäuseteile 6, 8 sind auf jedem der Schenkel 9a, 9b schalenartig ausgebildet. Das heißt, beide Gehäuseteile 6, 8 weisen jeweils eine von einem Randbereich 6a, 8a umlaufene Mulde 6b, 8b oder auch Vertiefung auf, wobei die Randbereiche 6a, 8a in dem hier gezeigten Ausführungsbeispiel vollständig umlaufend ausgebildet sind. Da die Gehäuseteile 6, 8 jeweils abgewinkelt sind, sind auch die jeweiligen Mulden 6b, 8b und Randbereiche 6a, 8a abgewinkelt. Auf den Schenkeln 9a, 9b bilden die Randbereiche 6a, 8a jeweils eine U-förmige Umrandung. Durch diese U-Form ist insbesondere eine Anzahl von Ecken auf der Umrandung ausgebildet. Beispielsweise umfasst die U-Form drei im Wesentlichen gerade Seiten, mit zwei Verbindungspunkten, an denen jeweils eine Ecke ausgebildet ist.

In den Randbereichen 6a, 8a ist zusätzlich jeweils ein Kragen 6c, 8c ausgebildet, der geeigneterweise als abgewinkelter Teil des jeweiligen Randbereiches 6a, 8a aus diesem durch Tiefziehen ausgeformt ist. Die Kragen 6c, 8c sind dabei vollständig umlaufend, das heißt auch über Eck ausgestaltet. In einer alternativen Ausgestaltungsform sind die Ecken ausgelassen. Beide Kragen 6c, 8c überlappen in montiertem Zustand und sind miteinander verschweißt sind. Beim Zusammensetzen der Gehäuseteile 6, 8 entlang der Kragen 6c, 8c werden diese gegeneinandergedrückt und miteinander verpresst, wodurch ein beispielsweise aufgrund von Fertigungstoleranzen zwischen den Kragen 6c, 8c liegender Spalt derart reduziert ist, dass ein Verschweißen ohne Zufuhr von zusätzlichem Material durchführbar ist.

Durch geeignetes Auslegen der zur Herstellung des ersten Gehäuseteiles 6 verwendeten Tiefziehform ist an diesem sowie auf dem ersten Schenkel 9a weiterhin ein Aufbau 10 mit einer Anzahl von Seitenwänden sowie einer Stirnwand 12 angeformt. Mit anderen Worten: der Aufbau 10 ist durch Tiefziehen aus dem ersten Gehäuseteil 6 ausgeformt. Dabei weist der Aufbau 10 senkrecht zur Zeichenebene eine geringere Breite als das erste Gehäuseteil 6 auf. Desweiteren ist das Gehäuse 4 nicht notwendigerweise spiegelsymmetrisch bezüglich der Zeichenebene.

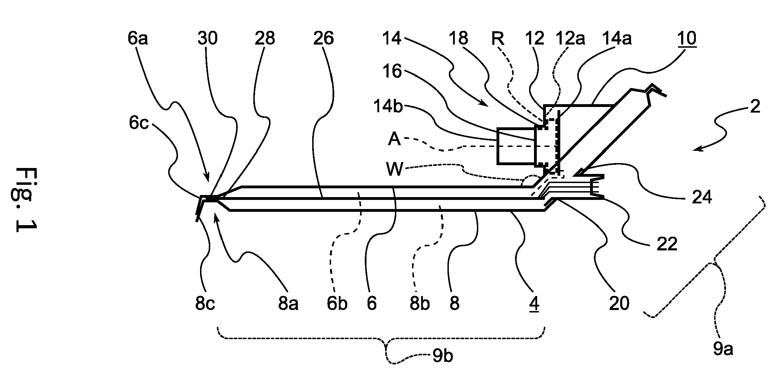

Die Stirnwand 12 bildet gehäuseinnenseitig eine Referenzfläche 12a zur Ausrichtung eines Kameramoduls 14. Dazu umfasst dieses eine Kameramodulplatine 14a, an dem eine Optik 14b derart angeordnet ist, dass diese innenseitig an der Referenzfläche 12a anliegt. Dazu ist die Optik 14b in dem hier gezeigten Ausführungsbeispiel nach Art zweier in Richtung der optischen Achse A hintereinander angeordneter Zylinder ausgestaltet. Dadurch ergibt sich eine ringförmige Fläche R, die an der Referenzfläche 12a anliegt. In Fig. 1 ist der gehäuseinnenseitig liegende Teil der Optik 14b gestrichelt dargestellt. Desweiteren ist die Optik 14b ist mit der Referenzfläche 12a verbunden, beispielsweise verklebt. In einer alternativen Ausgestaltung ist das Optikgehäuse aus einem Metall gefertigt und mit dem Gehäuse verschweißt.

Die Optik 14b ragt durch eine geeignete Öffnung 16 aus dem Gehäuse 4 heraus. Die Öffnung 16 ist von einer ebenfalls beim Tiefziehen ausgebildeten Kragenkontur 18 umfasst. Diese dient weiterhin dazu, die Optik 14b auszurichten und zu haltern. Insbesondere weist die Optik 14b eine optische Achse A auf, die senkrecht sowohl zur Kameramodulplatine 14a als auch zur Referenzfläche 12a verläuft. In dem hier gezeigten Ausführungsbeispiel ist die Referenzfläche 12a senkrecht zum zweiten Schenkel 9b. Somit verläuft die optische Achse A parallel zu diesem. In einer alternativen Ausführungsform ist die Referenzfläche 12a nicht senkrecht zum zweiten Schenkel 9b.

In dem zweiten Gehäuseteil 8 ist weiterhin eine Öffnung 20 eingebracht zum Durchführen eines Anschlusses 22, der hier als Steckkupplung ausgebildet ist. In dem hier gezeigten Ausführungsbeispiel ist die Öffnung 20 auf der dem Aufbau 10 und der Optik 14b gegenüberliegenden Seite des ersten Schenkels 9a angeordnet. Der Anschluss 22 dient unter Anderem zur Energieversorgung des Kamerasystems 2. Der Anschluss 22 ist mit einem Flansch 24 versehen, mittels dessen der Anschluss 22 gehäuseinnenseitig an dem Gehäuseteil 8 anliegt und dadurch positioniert ist. Der Anschluss 22 ist weiterhin mit einer Platine 26 verbunden. Diese ist wiederum mit der Kameramodulplatine 14a verbunden. Auf diese Weise ist das Kameramodul mit Energie versorgt und Bilddaten sind zur Platine 26 übertragbar.

Die Platine 26 ist in dem zweiten Schenkel 9b des Gehäuses 4 mittels einer hier nicht gezeigten, geeigneten Positionierhilfe angeordnet und verrutschsicher gehaltert. Die Positionierhilfe umfasst beispielsweise eine Anzahl von zusätzlichen Ausformungen eines der Gehäuseteile 6, 8, wobei die Platine 26 an diesen Ausformungen angelegt ist oder geeignete Gegenstücke aufweist, die in die Ausformungen eingreifen, diese umgreifen oder anderweitig mit diesen verbunden sind. In einer alternativen Ausgestaltung ist die Platine 26 zwischen geeignet ausgeformten Stellen der Gehäuseteile 6, 8 eingeklemmt. Insbesondere weist die Platine 26 in dem hier gezeigten Ausführungsbeispiel einen Platinenrandbereich 28 auf, der in einem durch die Randbereiche 6a, 8a der Gehäuseteile 6, 8 definierten Zwischenraum 30 einliegt. Dabei sind die Randbereiche 6a, 8a derart ausgestaltet, dass diese das Gehäuse 4 im Bereich des Schenkels 9b U-förmig umlaufen. Dadurch ist die Platine 26 auf drei Seiten durch die beiden Gehäuseteile 6, 8 eingeklemmt und insbesondere verrutschsicher gehalten.

### Bezugszeichenliste

- 2: Kamerasystem
- 4: Gehäuse
- 6: erstes Gehäuseteil
- 6a: Randbereich
- 6b: Mulde
- 6c: Kragen
- 8: zweites Gehäuseteil
- 8a: Randbereich
- 8b: Mulde
- 8c: Kragen
- 9a: Schenkel
- 9b: Schenkel
- 10: Aufbau
- 12: Stirnwand
- 12a: Referenzfläche
- 14: Kameramodul
- 14a: Kameramodulplatine
- 14b: Optik
- 16: Öffnung
- 18: Kragenkontur
- 20: Öffnung
- 22: Anschluss
- 24: Flansch
- 26: Platine
- 28: Platinenrandbereich
- 30: Zwischenraum

- A: optische Achse
- R: ringförmige Fläche
- W: Winkel

## Patentansprüche

1. Kamerasystem (2) eines Fahrassistenzsystems, mit einem eine Optik (14b) aufweisenden Kameramodul (14), mit einem Gehäuse (4), das ein erstes und ein zweites Gehäuseteil (6,8) umfasst, die jeweils aus Blech gefertigt sind, und mit einer in dem Gehäuse (4) angeordneten Platine (26), wobei wenigstens das erste Gehäuseteil (6) ein Tiefziehteil ist,
**dadurch gekennzeichnet, dass** dass das Gehäuse (4) nach Art zweier in einem Winkel (W) zueinander angeordneter Schenkel (9a, 9b) ausgeformt ist, wobei die Platine (26) in dem einen Schenkel (9b) und das Kameramodul (14) in dem anderen Schenkel (9a) angeordnet ist.

2. Kamerasystem (2) nach dem vorhergehenden Anspruch,
**dadurch gekennzeichnet,**
**dass** das Gehäuse (4) eine innenliegende Referenzfläche (12a) aufweist zur Ausrichtung des Kameramoduls (14).

3. Kamerasystem (2) nach dem vorhergehenden Anspruch,
**dadurch gekennzeichnet,**
**dass** die Referenzfläche (12a) die Innenseite einer Stirnwand (12) des ersten Gehäuseteiles (6) ist.

4. Kamerasystem (2) nach Anspruch 2 oder 3,
**dadurch gekennzeichnet,**
**dass** die Optik (14b) zur Ausrichtung an dem Gehäuse (4) an der Referenzfläche (12a) anliegt.

5. Kamerasystem (2) nach einem der vorhergehenden Ansprüche,
**dadurch gekennzeichnet,**
**dass** das Gehäuse (4) eine von einer Kragenkontur (18) umlaufene Öffnung (16) zur Aufnahme der Optik (14b) aufweist.

6. Kamerasystem (2) nach dem vorhergehenden Anspruch,
**dadurch gekennzeichnet,**
**dass** die Kragenkontur (18) aus der Stirnwand (12) ausgeformt ist.

7. Kamerasystem (2) nach einem der vorhergehenden Ansprüche,
**dadurch gekennzeichnet,**
**dass** die Platine (26) verrutschsicher in dem Gehäuse (4) angebracht ist.

8. Kamerasystem (2) nach einem der vorhergehenden Ansprüche,
**dadurch gekennzeichnet,**
**dass** das Gehäuse (4) eine Öffnung (20) zur Durchführung eines mit der Platine (26) verbundenen Anschlusses (22) aufweist.

9. Kamerasystem (2) nach einem der vorhergehenden Ansprüche,
**dadurch gekennzeichnet,**
**dass** die Gehäuseteile (6, 8) jeweils einen vollständig umlaufenden Randbereich (6a, 8a) aufweisen, an dem die Gehäuseteile (6, 8) miteinander verbunden sind.

10. Kamerasystem (2) nach dem vorhergehenden Anspruch,
**dadurch gekennzeichnet,**
**dass** die Gehäuseteile (6, 8) entlang der Randbereiche (6a, 8a) miteinander verschweißt sind.

## Claims

1. A camera system (2) of a driver assistance system, having a camera module (14) that has an optical system (14b), having a housing (4) that comprises a first housing part and a second housing part (6,8), which are each made of sheet metal, and having a circuit board (26) arranged in the housing (4), wherein at least the first housing part (6) is a deep-drawn part,
**characterised in that**
the housing (4) is in the form of two legs (9a, 9b) disposed at an angle (W) to each other, wherein the circuit board (26) is arranged in one leg (9b) and the camera module (14) in the other leg (9a).

2. The camera system (2) according to the preceding claim,
**characterised in that**
the housing (4) has an internal reference surface (12a) for alignment of the camera module (14).

3. The camera system (2) according to the preceding claim,
**characterised in that**
the reference surface (12a) is the inner surface of an end wall (12) of the first housing part (6).

4. The camera system (2) according to claim 2 or 3,
**characterised in that**
the optical system (14b) rests against the reference surface (12a) for the purpose of alignment with the housing (4).

5. The camera system (2) according to any one of the preceding claims, **characterised in that** the housing (4) has an opening (16) with a surrounding collar contour (18) to accommodate the optical system (14b).

6. The camera system (2) according to the preceding claim,
**characterised in that**
the collar contour (18) is formed out of the end wall (12).

7. The camera system (2) according to any one of the preceding claims,
**characterised in that**
the circuit board (26) is attached in a non-slip manner in the housing (4).

8. The camera system (2) according to any one of the preceding claims,
**characterised in that**
the housing (4) has an opening (20) for passing through a connector (22) which is connected to the circuit board (26).

9. The camera system (2) according to any one of the preceding claims,
**characterised in that**
each of the housing parts (6, 8) has a fully surrounding periphery (6a, 8a), by which the housing parts (6, 8) connect together.

10. The camera system (2) according to the preceding claim,
**characterised in that**
the housing parts (6, 8) are welded to each other along the peripheries (6a, 8a).

## Revendications

1. Système de caméra (2) d'un système d'assistance à la conduite, comprenant un module de caméra (14) qui comporte un système optique (14b), un support (4) comportant une première et une seconde pièce de support (6, 8) fabriquées chacune en tôle, et une carte électronique (26) disposée dans le support (4), au moins la première pièce de support (6) étant une pièce emboutie,
**caractérisé en ce que**
le support (4) est formé de deux branches (9a, 9b) disposées à un angle (W) l'une vis-à-vis de l'autre, la carte électronique (26) étant disposée dans l'une des branches (9b) et le module de caméra (14) dans l'autre branche (9a).

2. Système de caméra (2) selon la revendication précédente,
**caractérisé en ce que**
le support (4) comporte une surface de référence (12a) située à l'intérieur pour orienter le module de caméra (14).

3. Système de caméra (2) selon la revendication précédente,
**caractérisé en ce que**,
la surface de référence (12a) est la face intérieure d'une paroi frontale (12) de la première pièce de support (6).

4. Système de caméra (2) selon la revendication 2 ou 3,
**caractérisé en ce que**
le système optique (14b) porte sur la surface de référence (12a) pour l'orienter par rapport au support (4).

5. Système de caméra (2) selon l'une quelconque des revendications précédentes,
**caractérisé en ce que**
le support (4) comprend un orifice (16) entouré par un profilé en forme de collerette (18) destiné à loger le système optique (14b).

6. Système de caméra (2) selon la revendication précédente,
**caractérisé en ce que**
le profilé en forme de collerette (18) est façonné à partir de la paroi frontale (12).

7. Système de caméra (2) selon l'une quelconque des revendications précédentes,
**caractérisé en ce que**
la carte électronique (26) est disposée dans le support (4) de façon à ne pas pouvoir glisser.

8. Système de caméra (2) selon l'une quelconque des revendications précédentes,
**caractérisé en ce que**
le support (4) comporte un orifice (20) pour le passage d'une connexion (22) reliée à la carte électronique (26).

9. Système de caméra (2) selon l'une quelconque des revendications précédentes,
**caractérisé en ce que**
les pièces de support (6, 8) comprennent chacune une zone de bordure (6a, 8a) entièrement couvrante au niveau de laquelle les pièces de support (6, 8) sont reliées l'une à l'autre.

10. Système de caméra (2) selon la revendication précédente,
**caractérisé en ce que**
les pièces de support (6, 8) sont soudées l'une à l'autre le long des zones de bordure (6a, 8a).
